# EUROPEAN PATENT APPLICATION

(11) **EP 3 708 554 A1**
(43) Date of publication of application: **16.09.2020**
(21) Application number: 18822517.1
(22) Date of filing: 06.11.2018
(51) Int. Cl.: C04B 28/00, C04B 28/06, C04B 28/26, C04B 111/28, C04B 111/10

(54) **MULTIFUNCTIONAL MINERAL PANELS AND THEIR MANUFACTURING PROCESS**

(30) Priority: 06.11.2017 PT 2017110389
(71) Applicant: Minercell - Industrial Composites, S.A, 3680-323 Souto de Lafões (PT)
(72) Inventor: APARECIDO DOS SANTOS, Ronaldo, 3800-816 Aveiro (PT)
(74) Representative: Pelayo de Sousa Henriques, Rui
(86) International application number: PCT/PT2018/050041
(87) International publication number: WO 2019/088862

(57) **Abstract**

Mineral panels characterized in that they are composed in terms of percentage by dry weight of 1-35% calcium aluminate, 5-40% kaolin, as the first filler, 10-25% of amorphous silicate, 5-40% of a second mineral filler, calcium carbonate or industrial talc, 1-3% metasilicate, 0.2-2% aluminum hydroxide, 0.1-0.5% polycarboxylate, 0.3-5% polymethyl methacrylate or polymethyl methacrylate of low TG, and 1 to 30% fibers. They may have film-coated sides.

The manufacturing process comprises the following steps: (i) The formation of a fiber web; (ii) impregnation of the web with metasilicate; (iii) drying the impregnated web; (iv) the formation of sheets impregnating the web with at least one suspended compound comprising said components; (v) cutting and encasing, or vice versa, of the sheets; (vi) pressing; (vii) activation of the panel core blank compounds.

## Description

### Field of technology

The present invention relates to non-combustible, mineral-based, multifunctional panels free of contaminants, especially formaldehyde. They are mainly intended for the field of construction, restoration, architecture and decoration, with industrial applications. The main purpose of the panels of the present invention is to develop decorative and sustainable panels with high environmental, structural and esthetic-performance requirements. The invention further relates to the manufacturing process for such panels.

### Prior art

Currently, phenolic panels, also known as HPL (High-Pressure Laminates) represent the main technical coating panels on the market.

Exterior phenolic panels are usually applied as ventilated façade cladding in urban furniture, on balconies and in playground equipment. Inside, they can be used in locker rooms, more specifically in partition doors and cabinets.

According to the ISO 4586 and EN 438 standards, high-pressure laminates (HPL) are defined as a plate composed of layers of cellulosic fibrous material in the form of sheets, impregnated with thermosetting phenolic resins, and bonded by a high-pressure process with the simultaneous application of heat, which will yield a phenolic panel having a density of less than 1.35 g/cm3.

Examples of such laminates are disclosed in US Patent 3,616,021 and French patent 2 267 206.

In short, these products consist of a core of Kraft paper impregnated with phenolic resin and an outer layer of decorative paper impregnated with melamine resin.

Phenolic panels for outdoor use need to undergo an electron-beam curing process, which is a high-investment process impacting the cost of phenolic panels for outdoor use, which is why very few companies have this technology available. Another known treatment for phenolic panels for outdoor use is the application of an acrylic resin overcoat. However, the panels thus produced do not have the same advantageous features as those mentioned at the top of this paragraph.

The resins used in the manufacture of phenolic panels, be it for indoor or outdoor use, contain contaminants, i.e., formaldehyde, a substance that, in certain concentrations, i.e., those typically used in these types of panels, is harmful to health.

During the manufacturing process, the phenolic panels undergo a non-continuous process of high-pressure pressing. The high-pressure process consists of simultaneously applying heat (at a temperature >120 °C) and a high pressure (>5 Mpa, or 50 bar). During this process, a chemical cross-linking reaction occurs and the phenolic resins combine with the melamine forming a homogeneous, non-porous compact panel (with a density >1.35 g/cm3), and whose surface has the desired appearance.

Internal and external application of HPL laminates in the construction industry, as well as in other technical fields, is well-known. One of the most important characteristics of the panels for these applications is their flammability. Flammability is classified according to European standard EN13501-1. In case of non-flammable materials, according to the ISO 1716 standard, whereby a combustion heat value <3 MJ/kg is required.

Current HPL panels with higher fire resistance use flame-retardant synthetic resins (rendering the final product more expensive). In the best-case scenario, the classification of these materials according to EN13501-1 is class B1 (not readily flammable). Based on the use of cellulose as a carrier material, and synthetic resins as a bonding agent, flammability class A (A2 or A1), corresponding to non-combustible products, cannot be attained by HPL panels according to the current state of the art.

In contrast, phenolic panels have problems, when in contact with water, as the core of the Kraft paper, upon water contact, during drying and evaporation of said water, gives rise to uneven tensions causing warping and detachment of the panel. Another factor substantially contributing to the premature degradation of this type of phenolic panels is the orientation of the Kraft-paper fibers in the longitudinal direction, which causes the expansion of the phenolic panels to be predominantly in one direction, in other words, non-homogeneous (warp creation).

What's more, the said panels have problems due to their melamine surface. In fact, melamine resin makes phenolic panels porous, absorbs dust, dirt and other types of pollution contributing to the accelerated degradation of the panels.

This affects color stability, i.e., color fades over time.

US 2013/0,323,497 discloses an alternative, fire-resistant laminate of class A2. The laminate disclosed in this invention comprises various steps and materials used in the manufacture of "traditional" HPL panels, namely formaldehyde resins.

### Objects of the invention

The object of the present invention is to design multifunctional mineral panels with various application possibilities, within the fields of construction, restoration, architecture and decoration, including urban or other furniture, as well as industrial applications, notably decorative and indoor flooring and coverings, without the use of formaldehyde.

The increasingly stringent fire-prevention regulations are noticeably limiting the application fields for flammable building materials, particularly for external applications. Furthermore, progress in the harmonizing of building regulations requires safety regulations to be tightened. Architects increasingly require stronger façade elements with a high quality of surface finish. For internal areas, regulations on wall covering in hospitals, nursing homes, schools, public buildings, airports and, in particular, escape routes have been tightened. In case of a fire, the object is to ensure full and safe evacuation of the building, even with a high evacuation time. The multifunctional mineral panels of the present invention aim to allow for freedom of design, while meeting the safety requirements for this type of applications, attaining a fire resistance rating of A1, and maintaining high mechanical strength.

Other objects will become clear from reading the present specification below.

### Specification

For this purpose, the panels according to the present invention are characterized in that they are composed in terms of percentage by dry weight of 1-35% calcium aluminate, 5-40% kaolin, as regards the first filler, and 10-25% amorphous silicate combined with 5-40% of a second mineral filler. It should be noted that kaolin has a dual function, acting either as an initial filler, or as a plasticizer.

According to a first embodiment of the invention, wherein the mineral panels are rigid panels, these panels are composed in terms of percentage by dry weight of 1-35% calcium aluminate, 5-15% kaolin, 10-25% amorphous silicate, 10-40% calcium carbonate, as regards the second mineral filler, of 1-15% vegetable fibers, 1-3% metasilicate, 0.2-2% aluminum hydroxide, 0.1-0.5% polycarboxylate and 1-3% polymethyl methacrylate, in a preferred composition, likewise in terms of percentage by dry weight, being composed of 10-30% calcium aluminate, 7-15% kaolin, 12-20% amorphous silicate, 20-40% calcium carbonate, as regards the second mineral filler, of 5-10% vegetable fibers, 1.5-2.5% metasilicate, 0.3-1, 5 aluminum hydroxide, 0.2-0.4% polycarboxylate, and 1-3% polymethyl methacrylate.

According to a second embodiment of the invention, wherein the mineral panels are flexible panels, these panels are composed in terms of percentage by dry weight of 1-30% calcium aluminate, 10-30% kaolin, 10-25% amorphous silicate, 5-30% calcium carbonate, as regards the second mineral filler, of 5-30% vegetable fibers, 1-3% synthetic fibers, 1-2% metasilicate , 0.2-2% aluminum hydroxide, 0.1-0.5% polycarboxylate and 0.3-5% low-hardness polymethyl methacrylate, in a preferred composition, likewise in terms of percentage by dry weight, being composed of 10-25% calcium aluminate, 15-25% kaolin, 12-20% amorphous silicate, 8-25% calcium carbonate, as regards the second mineral filler, of 8-25% vegetable fibers, 2-3% synthetic fibers, 1-2% metasilicate, 0.3-1.5% aluminum hydroxide, 0.2-0.4% polycarboxylate and 0.3-5% polymethyl methacrylate of low-viscosity acrylate.

According to a third embodiment of the invention, wherein the mineral panels are memory panels, these panels are composed of 1-30% calcium aluminate, 15-40% kaolin, 10-25% amorphous silicate, 10-35% industrial talc in terms of percentage by dry weight, as regards the second mineral filler, of 5-20% of a blend of vegetable fibers, 1-2% synthetic fibers, 1-3% metasilicate, 0.2-2% aluminum hydroxide, 0.1-0.5% polycarboxylate and 1-4% polymethyl methacrylate of low hardness, in a preferred composition being composed of 10-25% calcium aluminate, 20-38% kaolin, 12-20% amorphous silicate, 15-30% industrial talc, likewise in terms of percentage by dry weight, as regards the second mineral filler, of 7-15% a blend of vegetable fibers, 1-2% synthetic fibers, 1-2.5 metasilicate, 0.3-1.5% aluminum hydroxide, 0.2-0.4% polycarboxylate and 1-4% polymethyl methacrylate of low viscosity hardness.

Memory panels are understood to be flexible panels that flex under the application of loads, but do not instantly resume their starting position upon removal of the loads.

In short, the said three embodiments generally comprise panels characterized in that they are composed, in terms of percentage by dry weight, of 1-35% calcium aluminate, 5-40% kaolin, as a first filler, 10-25% silicate, 5-40% of a second mineral filler of calcium carbonate or industrial talc, 1-3% metasilicate, 0.2-2% aluminum hydroxide, 0.1-0.5% polycarboxylate, 0.3-5% polymethyl methacrylate or polymethyl methacrylate of low TG and 1-30% fibers.

According to a preferred embodiment, and in addition to the components described above, wetting agents, pH regulators and pigments, in very small percentages may also be used as additives, and in addition to the aforesaid polycarboxylate and polymethyl methacrylate.

According to the invention, as described above, about 96% by dry weight of the product consists of natural raw materials.

Another natural raw material, which may be added to the composition of the panels according to the invention, are cork granulates, preferably with an average diameter of 0.5-5 mm, and 3-10% by dry weight.

Also, as additives, microspheres accumulating thermal energy may be used in percentages of 5-15% by weight.

According to the invention, the mineral panels may combine the features of the three embodiments described above within the same core, in any combination, and within several layers. Thus, for example, a panel according to the invention may have a rigid mid- layer and two flexible ones, another example would be a panel with a core composed of a rigid mid-layer, a flexible surface layer, and another memory surface layer. Obviously, this combination may have more than three layers within the same core.

The invention further relates to the panel manufacturing process described above.

Such a process comprises the following steps:
- An initial step of forming a fiber web;
- A second step consisting of the impregnation of the fiber web with metasilicate, and its drying;
- A third step consisting in drying the impregnated web;
- A fourth step consisting of the formation of one or more sheets resulting from the impregnation of the web in the previous step, previously pre-impregnated and dried, with at least one suspension compound according to the invention, i.e., by incorporating 1-35% calcium aluminate, 5-40% kaolin by dry weight, as regards the first filler, and 10-25% amorphous silicate, combined with 5-40% of a second mineral filler;
- A fifth step consisting of the formation of a panel pre-core, by cutting and encasing, or vice versa, the sheet(s) impregnated with the compound(s) according to the invention;
- A sixth step consisting of the formation of a panel core blank by pressing the pre-panel;
- A seventh step consisting of the activation of the compounds of the panel core blank.

According to the process of the invention, depending on whether it is desirable that the sheet(s) represent a rigid product, a flexible product, or a memory product, suspension compounds are used in step iv), whose composition, in percentage by dry weight, is as indicated above for the first to third embodiments, respectively.

It should be noted that in the three embodiments described above, the synthetic additives, which are added to the composition of the compound used in step iv), and which each have a fluidizing and binder function, i.e., the polycarboxylate and the polymethyl methacrylate or the polymethyl methacrylate of low TG (low glass transition temperature), are suspended in water at about 55 to 65% by weight. The inerts in liquid form, which are added to the composition of the said compound, i.e., metasilicate, are suspended in water at 30 to 40% by weight). Additional water in a ratio of at least 40% by weight relative to the mass of the dry inerts is used, such that the compound is kept in suspension.

According to the invention, one or more sheets undergo cutting followed by encasing, i.e., encasing, notably by winding, followed by cutting, thus forming a panel pre-core, which is subjected to pressure, between about 50 and 100 bar, in particular in a press, thus forming a panel core blank.

The panel cores undergo activation, preferably in an autoclave, followed by a natural silicon step. Alternatively, activation and silification may both occur naturally in a longer step. In addition, silification in an autoclave may be arranged, however, this would require the addition of unnatural accelerators to the web impregnation compound used in step iv).

Finishing of the panels begins with a pre-finishing step, in which the cores of the panel blanks are exposed to the following three steps: a) drying; b) calibration and adjustment of thickness; and c) application of a primer to the surfaces.

The panel cores are subjected, on the faces of their sides , either to surface varnishing or the application of an impregnated decorative film, or a final surface finish. Finally, the panels thus formed are subjected to perimeter fine trimming [uncertain translation] and packaging.

According to an embodiment of the invention, the above-mentioned panel core blank following solification of its silification process, undergoes drying, followed by calibration, and initially an application of a primer and finally a paint or a protective varnish, or a decorative surface film, in the latter instance, upon the application of a glue product thereof over the said primary.

### Advantages of the panels according to the invention

The panels according to the invention differ from phenolic panels in terms of their non-combustibility (class A1), since they are free of contaminants, especially formaldehyde, having high dimensional stability and a high resistance to humidity, as well as a decorative surface, resistant to various environmental conditions, and allowing a variety of finishes. The panels according to the invention are weatherproof, resistant to frost and thaw, impact-resistant and resistant to microorganisms, in addition to being highly durable and recyclable. As a result of these properties, these panels can be safely used in the most varied applications, wherein, e.g., phenolic panels cannot be used, in particular, due to their flammability.

Another important advantage of the present invention over phenolic panels is their manufacturing process, which involves lower energy consumption and does not use environmentally harmful raw materials.

In addition, all waste materials produced during the manufacturing process, particularly excess water in the aforementioned second (ii) and fourth (iv) steps, as well as the plate remnants resulting from the final trimming, are reintroduced into the process itself, and with full recycling of cuts after milling, making A manufacturing process according to the invention environmentally friendly.

Other advantages will become clear from reading the present specification.

### Brief description of the figures

The accompanying figures, which are merely schematic, are presented by way of example and not limitation, showing examples of panels according to particular exemplary embodiments of the invention, whose dimensions and proportions are not necessarily the actual ones, but merely intended to present the principal aspects of the invention, whose scope of protection is determined by the appended claims.
[Fig. 1]

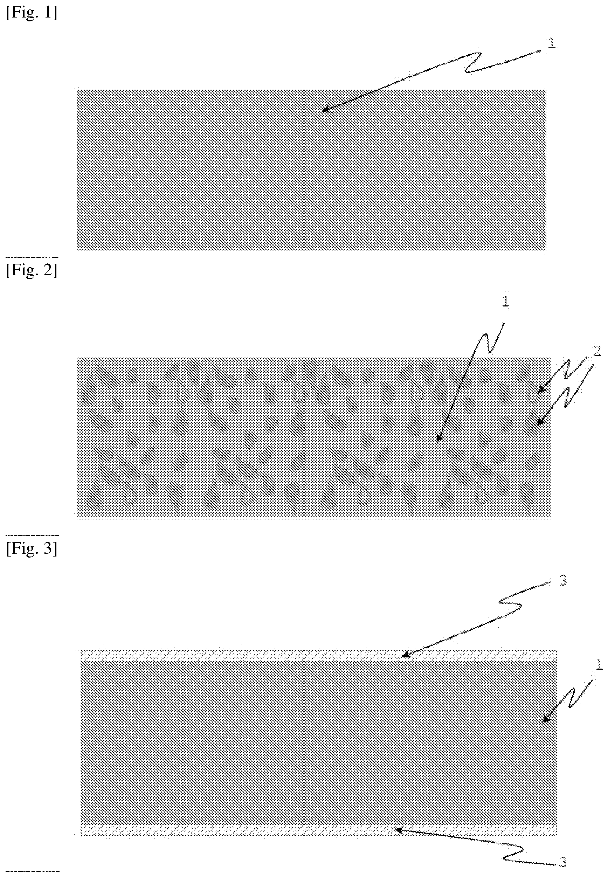

   Fig. 1 shows schematically a core of a panel according to the invention.
[Fig. 2]
   Fig. 2 shows schematically a core of a panel according to the invention, specifically an embodiment, in which cork or another acoustically insulating material is used.
Fig. 3]
   Fig. 3 shows schematically a panel according to the invention, specifically an embodiment, in which the center core is covered superficially on each side by impregnated decorative films.
[Fig. 4]

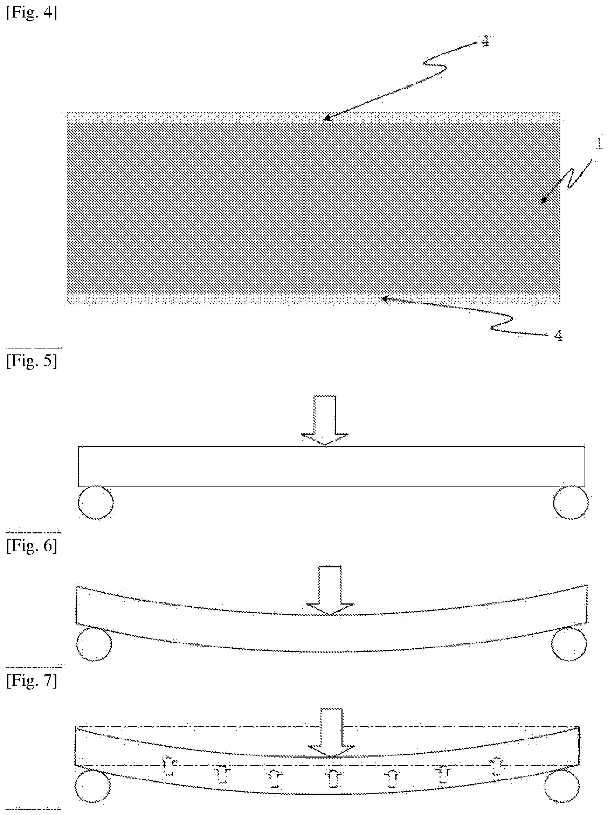

   Fig. 4 shows schematically a panel according to the invention, specifically an embodiment, in which the center core is covered superficially on each side by an impregnated decorative aluminum foil.
[Fig. 5]
[Fig. 6]
   Figs. 5, 6, respectively, show schematically a panel according to the invention in a rigid and flexible configuration.
[Fig. 7]
   Fig. 7 shows schematically the panel according to the invention in a "memory" configuration found in the natural position of the panel, i.e., the panel is not being affected by external forces, as indicated by the dash-dotted line.
[Fig. 8]
[Fig. 9]
[Fig. 10]

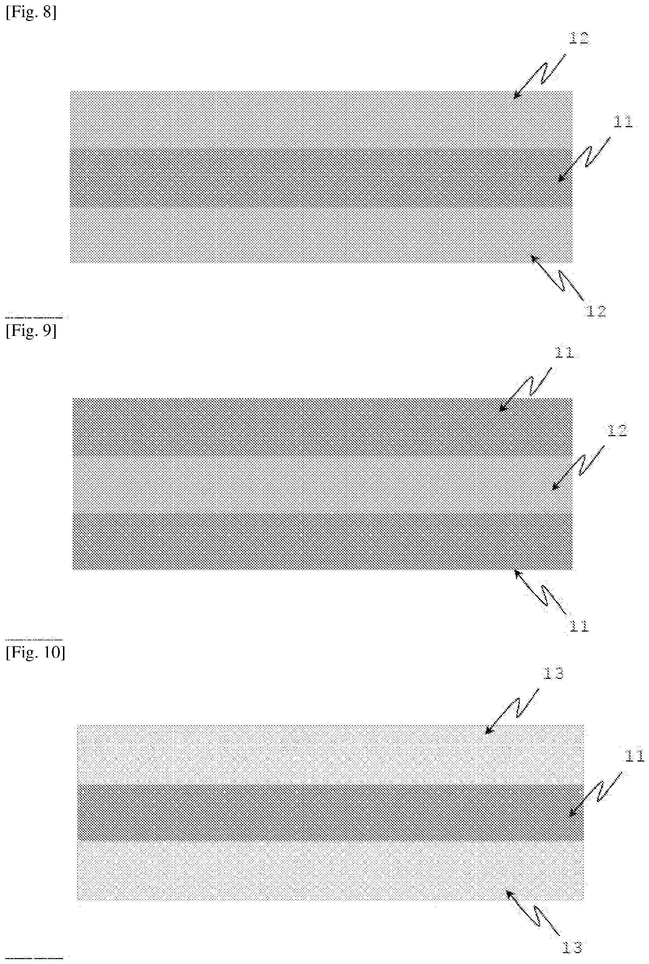

   Figs. 8, 9 and 10, respectively, show schematically panels according to the invention with a core having three separate main layers, i.e., flexible/rigid/flexible, rigid/flexible/rigid and "memory"/rigid."
[Fig. 11]

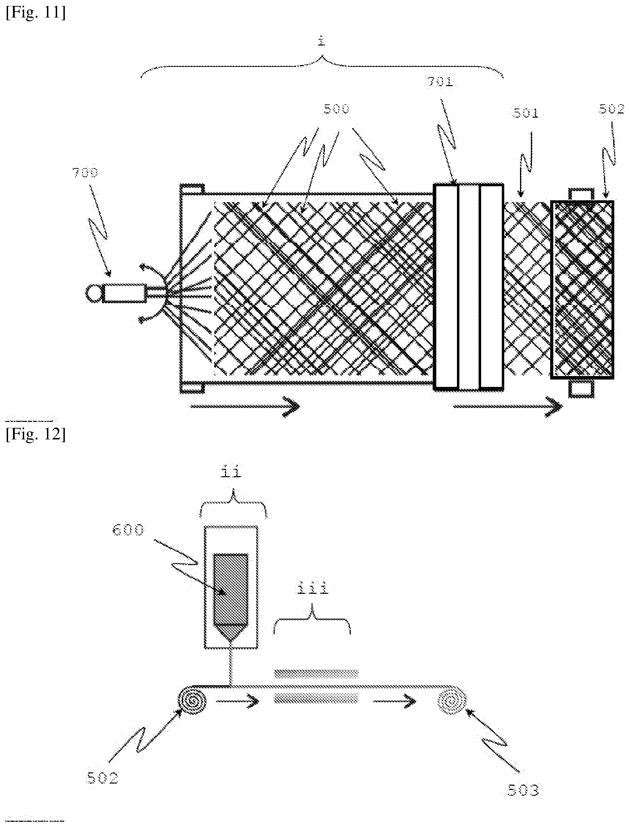

   Fig. 11 is a schematic, exemplary representation of the first step of the panel manufacturing process according to the invention, i.e., the formation of the fiber web.
[Fig. 12]
   Fig. 12 is an exemplary schematic representation of the second and third steps of the panel manufacturing process according to the invention, i.e., the first impregnation of the web and subsequent drying.
[Fig. 13]

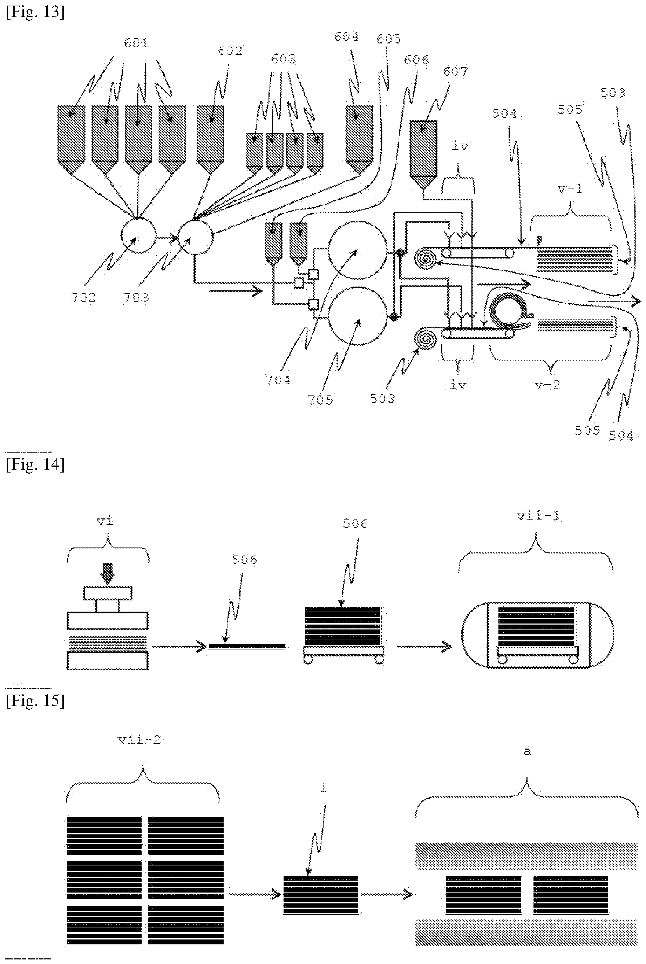

   Fig. 13 is an exemplary schematic representation of the fourth step of the panel manufacturing process according to the invention, i.e., the second impregnation of the fiber web, thus forming a sheet, and two variants of the fifth step of the said process, i.e., cutting and encasing the sheets, respectively, or encasing by winding the sheets including cutting.
[Fig. 14]
   Fig. 14 is an exemplary schematic representation of the sixth step of the panel manufacturing process according to the invention, i.e., pressing the pre-core of the panel, and part of the seventh step of the said process, i.e., autoclave activation.
[Fig. 15]
   Fig. 15 is an exemplary schematic representation of the second part of the sixth step of the panel manufacturing process according to the invention, i.e., natural silification, and the first step of the panel pre-finishing process.
[Fig. 16]

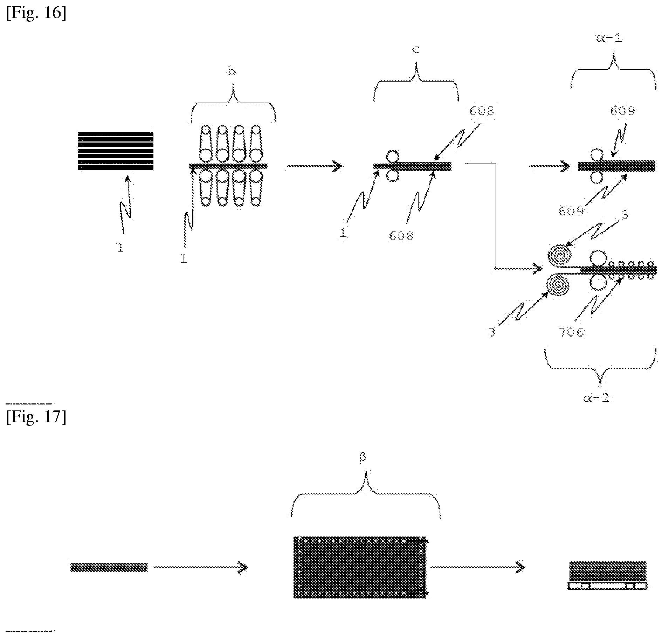

   Fig. 16 is an exemplary schematic representation of the second and third steps, respectively, of the panel pre-finishing process according to the invention, i.e., calibration and adjustment of their thickness, as well as primer application, and also of two variants of the first step of final panel finishing, i.e., application of a protective paint or varnish, and the application of an impregnated decorative film.
[Fig. 17]
   Fig. 17 is an exemplary schematic representation of the finishing operation, i.e., perimeter fine trimming and the packaging operation are completed.

### Description of an exemplary embodiment

An exemplary embodiment of the present invention is described below referencing the drawings, as appropriate, wherein the reference numerals are as follows.

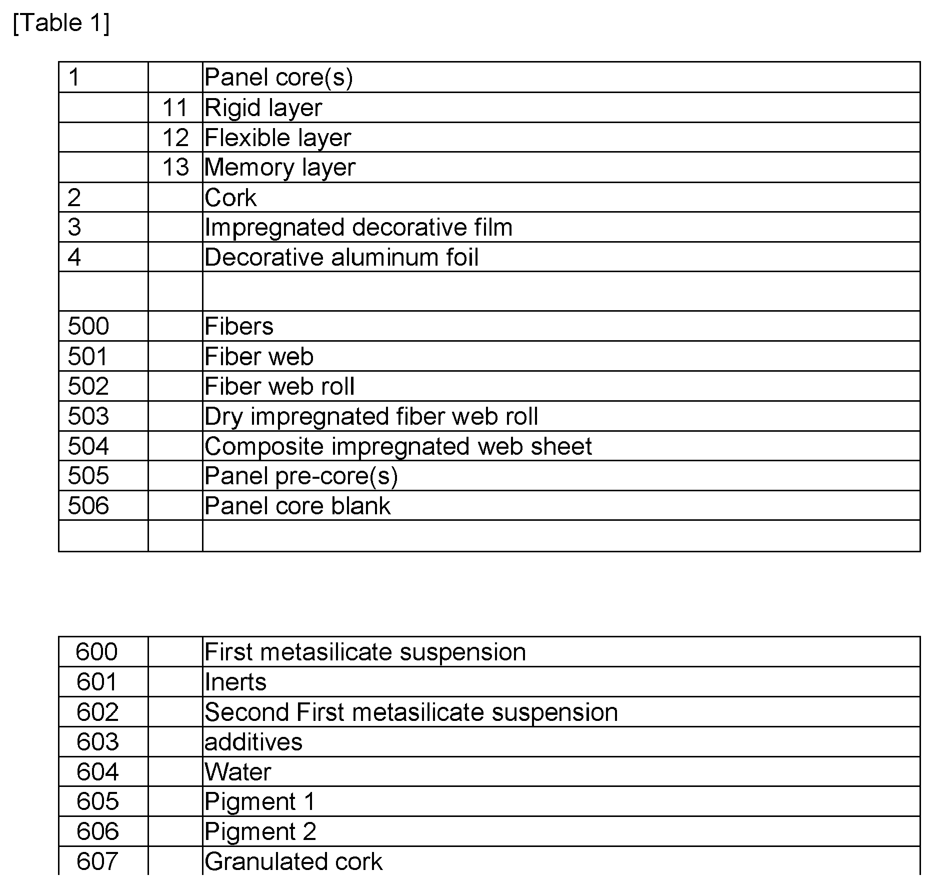

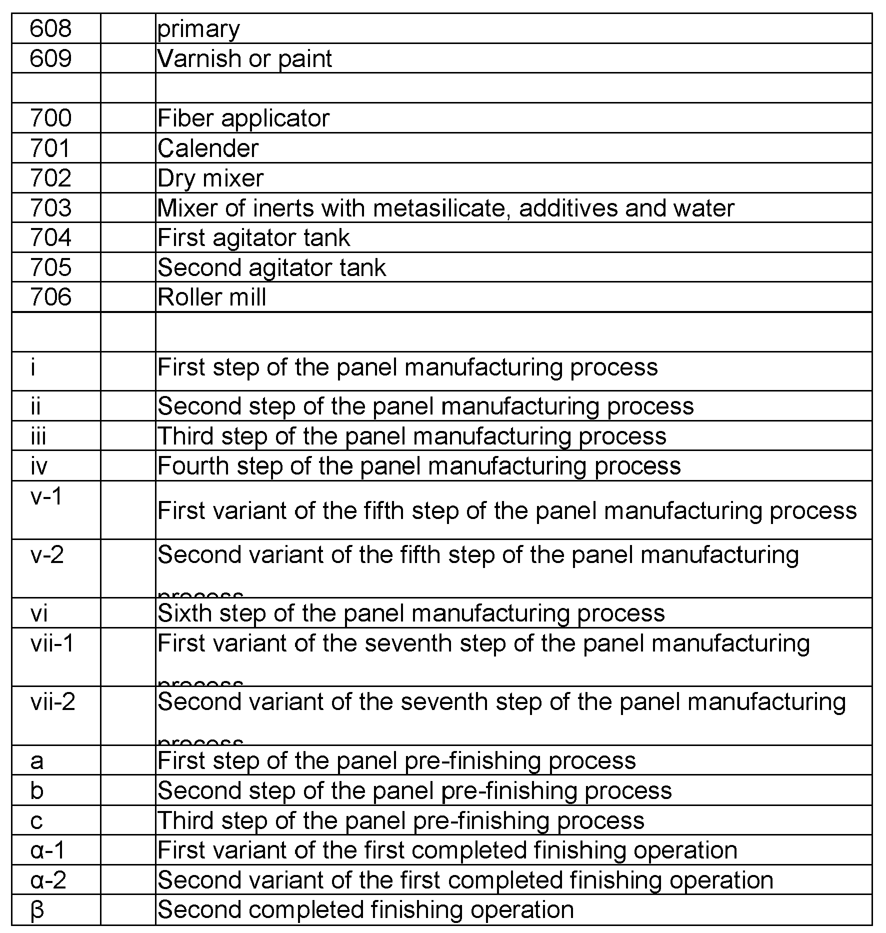

According to an exemplary embodiment, the panel manufacturing process comprises, as shown in Fig. 11, a first step (i) of forming a fiber (500) web (501), wherein the fibers are deposited in a uniform layer having a density of about 16-20 g/m2 on a conveyor belt, and made to pass through a roller calender (701) under a pressure of about 20-30 bar, at a temperature of about 120 °C, forming a fiber web that can be rolled up, i.e., on a roll (502).

Prior to the aforesaid application of the fiber layer, the fibers are selected.

Preferably the fibers used are selected from vegetable fibers, being either of one single type, or depending on the type of products to be produced, of more than one type. Likewise, it is also possible to use synthetic fibers. If the fibers are not of one single type, their dosage is followed by a blending operation in order to obtain a uniform distribution as part of the aforesaid application.

In a second process step (ii), as is shown in Fig. 12, the fiber web is impregnated for a short period, preferably continuously, with a solution of metasilicate suspended in water at about 60 to 70% by weight, the excess moisture being removed, e.g., by a pair of press rollers (not shown in the figure), whereby the thus impregnated web is subjected, in a third step (iii), shown in figure 12, as well, i.e., a process of drying in a dryer at a temperature of 120 to 140 °C at ambient pressure, whereupon the impregnated and dried fabric may be rewound, in particular on a roll (503).

The impregnation may be perfumed by any prior-art method, such as, e.g., continuous soaking in a tub (e.g., a tub of less than one meter in length and circulating the fiber web at a rate of about 100 m/min), letting it pass between transfer rollers, or by spraying.

Said impregnation of the fiber web serves to waterproof the fibers, such that they retain their mechanical properties, thereby avoiding their natural biological degradation process, rendering them completely inert, and, moreover, increasing their fire resistance capacity. Additionally, it promotes adhesion to the web of the compound to be subsequently impregnated.

In a fourth step (iv), shown in Fig. 13, the impregnated and dried fiber web is impregnated with a compound according to the invention, which is preferably formed by dosing its inerts and the respective mixture in a dry mixer (702), followed by their mixing in a second mixer (703) with the dosed liquid components, i.e., liquid silicates (the metasilicate, suspended in water at 30 to 40% by weight) and the additives (i.e., polycarboxylate and polymethyl methacrylate, suspended in water at 55 to 65% by weight), and additional water in a ratio of at least 40% by weight, relative to the dry inerts, in order to maintain the resulting compound in suspension.

This impregnation (iv) of the pre-impregnated web with silicates with said compound is preferably made in a curtain system, preferably on a microperforated conveyor and preferably subjected to vacuum in its lower portion, in order to remove excess water and assist web traction on the conveyor. Preferably, the sheet (504) thus formed has a thickness of about 0.8-1.2 mm. The curtain system is multiple and makes it possible to apply different compounds according to the invention in order to form the desired panels, as described above, such that at each moment, the sheet being formed has a composition suitable for the panel, and if applicable for the part of the panel, which is to be incorporated.

In a fifth step (v), a panel pre-core (505) is formed from the sheet (504) formed in the previous step, which may be done particularly by any of the following two variants (v-1; v-2) of the process (both of which are shown in Fig. 13):
- The sheet (504) is cut into sections of a desired length for the panel, each section being deposited on top of the previously cut section, until reaching the desired number of sheet sections for forming a panel, and according to the collection thus assembled, referred to as a panel pre-core (505) for a press;
- A forming roll, whose perimeter equals the maximum length of each panel, is continuously winding the sheet (504), providing a number of windings corresponding to the number of desired sheet layers of the panel core, thus constituting the wound and cut panel pre-core (505), and stripped from the forming roll and proceeding to a press.

In a sixth step (vi), shown in Fig. 14, each panel pre-core (505) is pressed at a pressure of 50-100 bar, for about 15 to 20 seconds. Pressing allows for removal of the air in the plate structure and further compression of the panels giving them a high density. According to the present embodiment of the invention, panels larger than 3,700 by 1,650 mm and with thicknesses of 6 to 20 mm may be obtained. In the case of encasing without winding, it is technically possible to obtain even higher thicknesses.

While the thickness of the panel is gradually obtained during the production of the core, as described above, it is certain that at the end of the pressing, the sheets are inextricably connected to one another, yielding a density of at least 1,500 kg/m3. Furthermore, it is interesting to note that, due to the characteristics of the composition of the sheets, after encasing and before pressing, they already have sufficient strength to be manipulated by machine or manually.

As shown in said Fig. 14, the already pressed core blanks (506) are stacked and transported to an autoclave where, in a seventh step (vii-1) for activating the additives, they are exposed to a temperature of about 80-120 °C, at a pressure of about 3-4 bar, for a period of 4 to 6 hours, giving the panels a relative humidity of 30-50%. An eighth step (vii-2), shown in Fig. 15, follows, wherein the panel pre-cores are subjected to a natural silica process for about 10 to 15 days at ambient temperature. In a ninth step (a), also shown in Fig. 15, panel cores with a relative humidity of about 20-30% are subjected to a drying process in a dryer at ambient pressure and at a temperature of about 100-120 °C, for about 5-6 hours, resulting in a relative humidity of about 1-2%. In a tenth step (b), the panel cores are individually sized to the desired thickness, whereupon, in an eleventh step (c), a methacrylate based primer is applied on the surface.

In a twelfth step, the cores provided with the primer are provided individually with a decorative surface finish by one of the following two processes (α-1; α-2), both shown in Fig. 16;
- Each panel core is subjected to the application (α-1) of protective paint or varnish (609) on each of its two surfaces. In particular, a polyester resin or an acrylic resin may be used as varnish, and a water-based paint may be used as paint.
- Each panel core is subjected to the hot application (α-2), on at least one side, of a [chemically] reactive product for bonding with the primer and a decorative surface film (3), subjected to the application of a pressure of about 2-3 bar in a roller mill (706). The reactive product for hot bonding of the surface film is preferably selected from the group consisting of: polyurethane, polyester, epoxy and polyether. The decorative film may, e.g., be a sheet of paper impregnated with a synthetic resin, a sheet of metal, i.e., aluminum, copper or stainless steel, or a film of polymers, such as polyester (PES), polyethylene terephthalate (PET) or polyvinyl chloride (PVC). The decorative film may have a uniform color, or may be imaginative, having any motifs or decorative patterns, such as imitation wood or natural stones.

In a thirteenth step (β), shown in Fig. 17, each panel is trimmed to the desired final size, ready for use or packaging.

The process according to the invention has the advantage of being energy-efficient.

Figs. 1-10 show several examples of either panels according to the invention or the cores of such panels. The cores may be colored by avoiding pigments, e.g., using different colors for the sheets/cores of different rigidity. The cross-sectional view of a panel will therefore identify its type.

The panels according to the invention have high chemical resistance, including to UV rays, scratches and impacts.

Furthermore, according to certain particular embodiments, the panels have certain enhanced beneficial characteristics, such as thermal resistance, in the aforesaid case of using cork in the panel cores.

If, as above mentioned, energy-storing microspheres are used in the panel cores, these can be used as heat accumulators, thereby releasing at night the heat absorbed during the daytime.

Other special applications may include, for example, in the case of decorative aluminum foils, the use of aluminum foils, specially treated
- with silver ions, which interfere with the growth of microorganism colonies, thus the panels with such foils may be used in environments, where cleaning and hygiene are a priority. Typical areas of application are indoor environments, hospital centers, health centers, schools, nurseries, locker rooms, air conditioning systems.
- with a paint containing special high-performance and high-quality pigments that significantly improve reflection levels in dark tones, with a significant reduction in surface temperatures. The typical areas of application are for exterior environments as façade cladding and ventilated façades, especially with high sun exposure.

It should be noted that the particular embodiment of the present invention described herein may be subject to various modifications or alterations, without exceeding the scope and spirit of the present invention, as more described above and as set out in the claims.

## Claims

1. Mineral panels, **characterized in that** they are composed in terms of percentage by dry weight of 1-35% calcium aluminate, 5-40% kaolin, as a first filler, and 10-25% amorphous silicate, associated with 5-40% of a second mineral filler.

2. Mineral panels according to claim 1, **characterized in that** they are composed in terms of percentage by dry weight of 1-35% calcium aluminate, 5-15% kaolin, 10-25% amorphous silicate, 10-40% calcium carbonate, as regards the second mineral filler, 1-15% vegetable fibers, 1-3% metasilicate, 0.2-2% aluminum hydroxide, 0.1-0.5% polycarboxylate and 1 to 3% polymethyl methacrylate.

3. Mineral panels according to claim 2, **characterized in that** they are composed in terms of percentage by dry weight of 10-30% calcium aluminate, 7-15% kaolin, 12-20% amorphous silicate, 20-40% calcium carbonate, as regards the second mineral filler, 5 to 10% vegetable fibers, 1.5 to 2.5% metasilicate, 0.3-1.5 aluminum hydroxide, 0.2 to 0.4% polycarboxylate and 1 to 3% polymethyl methacrylate.

4. Mineral panels according to claim 1, **characterized in that** they are composed in terms of percentage by dry weight of 1-30% calcium aluminate, 10-30% kaolin, 10-25% amorphous silicate, 5-30% calcium carbonate, and as regards the second mineral filler, 5-30% vegetable fibers, 1-3% synthetic fibers, 1-2% metasilicate, 0.2-2% aluminum hydroxide, 0.1-0.5% polycarboxylate and 0.3-5 % polymethyl-methacrylate of glass transition temperature hardness.

5. Mineral panels according to claim 4, **characterized in that** they are composed in terms of percentage by dry weight of 10-25% calcium aluminate, 15-25% kaolin, 12-30% amorphous silicate, 8-25% calcium carbonate, and as regards the second mineral filler, 8-25% vegetable fibers, 2-3% synthetic fibers, 1-2% metasilicate, 0.3-1.5% of aluminum hydroxide, 0.2-0.4% polycarboxylate and 0.3-5 % polymethyl-methacrylate of glass transition temperature hardness.

6. Mineral panels according to claim 1, **characterized in that** they are composed in terms of percentage by dry weight of 1-30% calcium aluminate, 15-40% kaolin, 10-25% amorphous silicate, 10-35% industrial talc, and as regards the second mineral filler, 5-20% of a mixture of vegetable fibers, 1-2% synthetic fibers, 1-3% metasilicate, 0.2-2% of aluminum hydroxide, 0.1-0.5% polycarboxylate and 1-4% polymethyl-methacrylate of glass transition temperature hardness.

7. Mineral panels according to claim 6, **characterized in that** they are composed in terms of percentage by dry weight of 10-25% calcium aluminate, 20-38% kaolin, 12-20% amorphous silicate, 15-30% industrial talc, and as regards the second mineral filler, 7-15% of a mixture of vegetable fibers, 1-2% synthetic fibers, 1-2.5% metasilicate, 0.3-1.5% aluminum hydroxide, 0.2-0.4% polycarboxylate, and 1-4% polymethyl-methacrylate of glass transition temperature hardness.

8. Mineral panels according to claim 1, **characterized in that** their core may have several separate layers, each having the composition of at least one of claims 2 to 7.

9. Mineral panels according to claim 1, **characterized in that** they comprise, on at least one side, a decorative film attached to the core.

10. Mineral panels according to claim 1, **characterized in that** their core comprises cork granulates.

11. Mineral panels according to claim 1, **characterized in that** they comprise thermal-energy accumulating microspheres in their core.

12. A process for the manufacture of the mineral panels according to the preceding claims, **characterized in that** it comprises the following steps:
i) The formation of a fiber web;
ii) The impregnation of said fiber web with metasilicate;
iii) Drying of the impregnated web;
iv)The formation of one or more sheets impregnating the web, pre-impregnated and dried, with at least one suspended compound comprising in terms of percentage by dry weight 1-35% calcium aluminate, 5-40% kaolin, as regards the first filler, and 10-25% amorphous silicate, associated with 5-40% of a second mineral filler;
v) The formation of a pre-core panel by cutting and encasing, or vice versa, said blade(s) impregnated with the compound(s) indicated in step iii);
vi)The formation of a blank panel core by pressing the pre-panel;
vii) activation of the compounds of the panel core blank.

13. A manufacturing process according to claim 12, **characterized in that**, prior to step i), a prior dosage operation for fibers of various types, in particular vegetable fibers and/or synthetic fibers, takes place, followed by an operation of homogenizing the fiber-blend mixture.

14. A manufacturing process according to claim 12 or 13, **characterized in that** step i) consists in placing a uniform layer of fibers having a density of about 16-20 g/m² on a conveyor belt and passing it through a roller calender under a pressure of about 20-30 bar at a temperature of about 120° C.

15. A manufacturing process according to at least one of claims 12 to 14, **characterized in that** step ii) consists in briefly impregnating the fiber web with a solution of metasilicate suspended in water at about 60-70% by weight, the excess moisture being removed after such impregnation.

16. A manufacturing process according to at least one of claims 12 to 15, **characterized in that** the impregnation is carried out continuously and that the removal of excess moisture is also done continuously by a pair of press rollers, immediately after such impregnation.

17. A manufacturing process according to at least one of claims 12 to 16, **characterized in that** step iii) consists of drying at a temperature of 120-140 °C at ambient pressure.

18. A manufacturing process according to at least one of claims 12 to 17, **characterized in that** the suspended compound, with which the web is impregnated in step iv), has the following composition in terms of percentage by dry weight: 1-35% calcium aluminate, 5-15% kaolin, 10-25% amorphous silicate, 10-40% calcium carbonate, as regards the second mineral filler, 1-15% vegetable fibers, 1-3% metasilicate, 0.2-2% aluminum hydroxide, 0.1-0.5% polycarboxylate and 1-3% polymethyl methacrylate.

19. A manufacturing process according to claim 18, **characterized in that** the suspended compound, with which the web is impregnated in step iv), has the following composition in terms of percentage by dry weight: 10-30% calcium aluminate, 7-15% kaolin, 12-20% amorphous silicate, 20-40% calcium carbonate, as regards the second mineral filler, 5-10% vegetable fibers, 1.5-2.5% metasilicate, 0.3-1,5 aluminum hydroxide, 0.2-0.4% polycarboxylate and 1-3% polymethyl methacrylate.

20. A manufacturing process according to at least one of claims 12 to 17, **characterized in that** the suspended compound, with which the web is impregnated in step iv), has the following composition in terms of percentage by dry weight: 1-30% calcium aluminate, 10-30% kaolin, 10-25% amorphous silicate, 5-30% calcium carbonate, as regards the second mineral filler, 5-30% vegetable fibers, 1-3% synthetic fibers, 1-2% metasilicate, 0.2-2% aluminum hydroxide, 0.1-0.5% polycarboxylate and 0.3-5% polymethyl methacrylate of glass transition temperature hardness.

21. A manufacturing process according to claim 19, **characterized in that** the suspended compound, with which the web is impregnated in step iv), has the following composition in terms of percentage by dry weight: 10-25% calcium aluminate, 15-25% kaolin, 12-20% amorphous silicate, 8-25% calcium carbonate, as regards the second mineral filler, 8-25% vegetable fibers, 2-3% synthetic fibers, 1-2% metasilicate, 0.3-1,5% aluminum hydroxide, 0.2-0.4% polycarboxylate and 0.3-5% polymethyl methacrylate of glass transition temperature hardness.

22. A manufacturing method according to at least one of claims 12 to 17, **characterized in that** the suspended compound, with which the web is impregnated in step iv), has the following composition in terms of percentage by dry weight: 1-30% calcium aluminate, 15-40% kaolin, 10-25% amorphous silicate, 10-35% industrial talc, as regards the second mineral filler, 5-20% of a mixture of vegetable fibers, 1-2% synthetic fibers, 1-3% metasilicate, 0.2-2% aluminum hydroxide, 0.1-0.5% polycarboxylate and 1-4% of glass transition temperature polymethyl methacrylate.

23. A manufacturing process according to claim 22, **characterized in that** the suspended compound, with which the web is impregnated in step iv), has the following composition in terms of percentage by dry weight: 10-25% calcium aluminate, 20-38% kaolin, 12-20% amorphous silicate, 15-30% industrial talc, as regards the second mineral filler, 7-15% of a mixture of vegetable fibers, 1-2% synthetic fibers, 1-2.5 metasilicate, 0.3-1.5% aluminum hydroxide, 0.2-0.4% polycarboxylate and 1-4% of glass transition temperature polymethyl methacrylate.

24. A manufacturing process according to at least one of claims 12 to 23, **characterized in that**, in step iv, the synthetic additives, which are added to the composition of the compound used therein, and which have a fluidizing and binding function, respectively, i.e., polycarboxylate and polymethyl methacrylate or the low TG polymethyl methacrylate (low glass transition temperature) are suspended in water at about 55-65% by weight, as the inerts in liquid form, which enter the composition of the said compound, i.e., metasilicate, are suspended in water at 30-40% by weight, and as additional water is present in a ratio of at least 40% by weight relative to the weight of the dry aggregates.

25. A manufacturing process according to at least one of claims 12 to 24, **characterized in that**, in step v), the at least one sheet generated in step iv) is subjecting to cutting followed by encasing.

26. A manufacturing process according to at least one of claims 12 to 24, **characterized in that**, in step v), the at least one sheet generated in step iv) is subjected to encasing, particularly by rolling followed by cutting.

27. A manufacturing process according to at least one of claims 12 to 26, **characterized in that**, in step vi), the panel pre-core formed in step v) is subjected to a pressure of 50-100 bar.

28. A manufacturing process according to at least one of claims 12 to 27, **characterized in that**, in step vii), the panel cores formed in step vi) are subjected to activation (vii-1) in an autoclave at a temperature of 80-120 °C, at a pressure of 3-4 bar, for 4-6 h, followed by natural silica (vii-2) at an ambient temperature and pressure for 10 to 15 days.

29. A manufacturing process according to at least one of claims 12 to 27, **characterized in that**, in step vii), the panel cores formed in step vi) are naturally activated (vii-2) with silica for about 2 months

30. A manufacturing process according to at least one of claims 12 to 29, **characterized in that** after step vii), a panel pre-finishing step takes place, comprising:
a) drying;
b) Thickness calibration and adjustment;
c) primer application.

31. A manufacturing process according to claim 30, **characterized in that** the drying step a) is carried out at a temperature of about 100-120 °C, for about 5 to 6 h, at ambient pressure.

32. A manufacturing process according to claim 30, **characterized in that** the primer applied in step c) is acrylic.

33. A manufacturing process according to claim 30, **characterized in that** the panels are finished with a protective paint or varnish (α -1) on at least one of their sides.

34. A manufacturing process according to claim 30, **characterized in that** the panels are finished with a decorative film (α-2) on at least one of their sides.

35. A manufacturing process according to claims 33 or 34, **characterized in that** the panels are subject to perimeter final trimming (β) and packaging.
